# EUROPEAN PATENT APPLICATION

(11) **EP 3 473 561 A1**
(43) Date of publication of application: **24.04.2019**
(21) Application number: 17197071.8
(22) Date of filing: 18.10.2017
(51) Int. Cl.: B65D 81/05, B60P 7/06

(54) **DUNNAGE MEANS, PACKAGING SYSTEM, AND METHOD FOR APPLYING A DUNNAGE MEANS**

(71) Applicant: Storopack Hans Reichenecker GmbH, 72555 Metzingen (DE)
(72) Inventor: Root, Jan, 8017 NM Zwolle (NL)
(74) Representative: DREISS Patentanwälte PartG mbB

(57) **Abstract**

A dunnage means (10) for filling the void space (92) in a packaging container (44), comprising: an inflatable dunnage bag (12) having a first and a second wall (16, 18), the first and second walls (16, 18) at least partially being substantially parallel in an uninflated state of the dunnage bag (12); and an inflation valve (14) configured to allow to inflate the dunnage bag (12) with a gas and to gas tightly seal the dunnage bag (12) after inflation, the inflation valve (14) comprising a solid member (20) with a valve seat (36), characterized in that the solid member (20) being arranged between the first and the second wall (16, 18) of the dunnage bag (12) inside the dunnage bag (12), and the inflation valve (14) being configured to be operated towards a closed position by a portion (68) of the packaging container (44) during inflation of the dunnage bag (12).

## Description

The present invention relates to a dunnage means, a packaging system, and a method for applying a dunnage means according to the preambles of the independent claims.

European patent publication in EP 2 407 344 A1 discloses a dunnage means according to the preamble of claim 1. The known dunnage means comprises an inflatable dunnage bag and an inflation valve. The inflation valve is fixed to the outside of the dunnage bag and comprises a solid member which can be hooked into a wall of a packaging container.

It is an object of the present invention to provide an improved dunnage means which can easily be applied and is inexpensive to manufacture. It is a further object of the present invention to provide a reliable and low cost packaging system and a method of applying a dunnage means which can easily be executed.

The invention proposes a dunnage means, a packaging system, and a method of applying a dunnage means according to the independent claims. Embodiments of the invention are claimed in the dependent claims. Further important features of the invention are disclosed in the following specification and in the attached drawing.

The dunnage means according to the invention comprises an inflatable dunnage bag having a first and a second wall, the first and second walls at least partially being substantially parallel in an uninflated state of the dunnage bag. The inflatable dunnage bag may be of any kind, and preferably is manufactured from a thin and flexible polyethylene foil or film or the like. The inflatable dunnage bag used in the context of the present invention preferably is a closed bag having at least initially no opening and being initially substantially empty. It is to be understood that there is no need to have two discrete walls. Rather, it is within the disclosure of the present invention that the inflatable dunnage bag is one single unique piece the wall of which, of course, in an uninflated state, has wall portions laying one over the other, that is substantially parallel to each other.

The inventive dunnage means further comprises an inflation valve configured to allow to inflate the dunnage bag with a gas and to gas tightly seal the dunnage bag after inflation. Since, as mentioned above, the dunnage bag itself encases a closed inflatable volume, there is a need for an inflation valve which allows to provide a gas from the outside of the dunnage bag into the inside of the dunnage bag, that is into the inflatable volume. At the same time, after inflation, the inflation valve provides for a gas tight seal of the inner inflated volume of the dunnage bag against the outside environment. By doing so, the inflation valve allows the inflated dunnage bag to preserve its inflated state for a long time, for example during shipping of a packaging container in which the dunnage means is inserted in order to provide cushioning and dunnage to items placed inside the packaging container.

According to the invention, the solid member is arranged between the first and the second wall of the dunnage bag inside the dunnage bag. This means that the inflation valve is arranged within the dunnage bag prior to finally gas tightly sealing the dunnage bag. An advantage of this arrangement is that the inflation valve is permanently held within the dunnage bag and therefore cannot fall off the dunnage bag for example during storage or transportation of the uninflated dunnage bag prior to its insertion into a packaging container.

Furthermore, the inflation valve is configured to be operated towards a closed position by a portion of the packaging container, preferably by a closing flap of the container during inflation of the dunnage bag. Or, in other words: the inflation valve may be "switched" from an open state in which the inflatable volume of the dunnage bag is connected to an outside in order to be inflated into a closed state in which the inflatable volume of the dunnage bag is gas tightly sealed against an outside environment. The inflation valve is designed to be switched from one state into another state by a portion of the packaging container which is moving during the inflation process by the inflating dunnage bag, for example a closing flap of a packaging container. This moving portion, for example the closing flap of the packaging container thus acts as a "drive means" of the inflation valve. An advantage of this configuration is that there is no need any more for an external means for switching the inflation valve. Instead, the movement of the portion, such as the closing flap, which in any case moves because it is urged by the inflating dunnage bag, is used for the switching operation. By consequence, the inventive dunnage means is very simple and cheap to operate and to apply.

In a preferred embodiment the inflation valve comprises: a gas injection chamber which is delimited at least by a wall of the solid member and the first wall of the dunnage bag; and a valve element being configured to connect the injection chamber with an inflatable volume of the dunnage bag in an open position and to gas tightly seal the inflatable volume of the dunnage bag against the injection chamber in a closed position. This is a very cheap and reliable type of inflation valve. Furthermore, the injection chamber provides a space to place a simple injection means, such as an injection needle, during the inflation process in order to inject pressurized gas into the injection chamber and thus to inflate the inflatable volume of the dunnage bag.

In a further preferred embodiment the first wall of the dunnage bag is discontinuously connected to a front surface of the solid member in a first connection region, the first connection region being circumferential with respect to the gas injection chamber. In that area or those areas of the first connection region, where the first wall of the dunnage bag is not connected to the front surface, the first wall forms the valve element which allows gas to pass through the slit between the first wall and the front surface during inflation, when pressurized gas is introduced into the injection chamber. However, when the moving portion of the packaging container, such as the moving closing flap of the packaging container urges against the inflation valve, the first wall is urged against the front surface and therefore prevents the gas enclosed under pressure inside the inflated volume to escape. This provides for a reliable function of the inventive dunnage bag.

In a further preferred embodiment the solid member comprises a through opening, the gas injection chamber being delimited by the inner wall of the through opening, the first wall, and the second wall of the dunnage bag, the second wall being continuously and gas tightly connected to a rear surface of the solid member in a second connection region, the second connection region being circumferential with respect to the gas injection chamber. Such a dunnage means is inexpensive and easy to manufacture.

In a further preferred embodiment the solid member comprises a wall surrounding the injection chamber, wherein the wall comprises a discontinuous material region which penetrates the wall from the inner surface of the solid member to an outer surface of the solid member, and wherein at least that portion of the wall where the discontinuous material region is located is made of a rubber-like elastically deformable material. Those portions of the solid member delimiting the discontinuous material region thus form a valve element and a valve seat, respectively. If the discontinuous material region is formed, by way of example, by a cut, the valve element and the valve seat automatically have a complementary shape and thus perfectly seal in case they are pressed against each other (closed inflation valve). On the other side, the valve element and valve seat may considerably separate from each other in an open state of the inflation valve such that inflation of the dunnage bag is facilitated. Furthermore, this embodiment allows to inflate with higher pressure which shortens the inflation time. It is to be understood that various shapes of the discontinuous material region - when seen in radial direction - are possible, such as a straight shape, a curved shape, a zigzag-shape, and combinations of said shapes, or the like.

In a further preferred embodiment, the discontinuous material region comprises a (straight, when seen in radial direction) slit, a plane of the slit being preferably parallel to a plane of the front and rear surfaces of the solid member. This provides a good sealing performance in the closed state of the inflation valve and facilitates manufacturing of the solid member.

In a further preferred embodiment, the first wall and the second wall of the dunnage bag being continuously connected to a front surface and a rear surface, respectively, of the solid member in first and second connection regions, respectively, the first and second connection regions being circumferential with respect to the gas injection chamber. By consequence, the discontinuous material region forms the only valve element and valve seat, which eases manufacturing of the inventive dunnage means.

In a further preferred embodiment the solid member comprises a ring element having a substantially circular shape. For example, the solid member can be manufactured by cutting slices from a tubular raw material. This provides for an inexpensive and easy way to manufacture the solid member. However, it is to be understood that the present invention is not limited to solid members made from a ring element having a substantially circular shape. A variety of other external shapes of the solid member as well as internal shapes of the through opening in the solid member is possible, such as rectangular, triangular, and the like.

In a further preferred embodiment the solid member comprises a rubber type material. It is to be understood, that the term "rubber type material" encompasses any material having rubber like characteristics for sufficiently sealing between the solid member and the wall of the dunnage bag when the inflation valve is closed, such as rubber, silicone, and the like. Furthermore, preferably the material is selected such that it reliably and gas tightly can be connected to the material of the dunnage bag.

In a further preferred embodiment at least one of the connection regions is formed by welding or gluing. Different types of welding are applicable, for example heat welding, ultrasonic welding, et cetera. Welding and gluing provide for a reliable and long term gas tight connection and are easy to carry out.

In a further preferred embodiment the inflation valve is arranged adjacent a corner of the dunnage bag. This provides for an easy placement of the inflation valve at a location of the packaging container which can be readily accessed during packaging.

The invention also comprises a packaging system, comprising a packaging container for packaging at least one item, the packaging system further comprising a dunnage means according to the above mentioned embodiments.

In a preferred embodiment of the packaging system the packaging container comprises at least a first vertical side wall and a second vertical side wall, the first and second vertical side walls being adjacent and substantially orthogonal to each other. Each side wall has an upper edge, wherein a first closing flap is pivotably fixed to the upper edge of the first vertical side wall and a second closing flap is pivotably fixed to the upper edge of the second vertical side wall. The pivot fixation of the closing flaps to the upper edge can be realized by means of a line having a lower material stiffness than that of the vertical walls and the closing flaps such that a hinge is formed. In a closed state the dunnage means is arranged such that the inflation valve is pinched or squeezed between an upper surface of the second closing flap and a lower surface of the first closing flap.

The term "in a closed state" is to be understood that both closing flaps are substantially folded inwardly in order to form a cover which closes the volume inside the packaging container. Thus both closing flaps act in their closed state against the inflation valve such that the inflation valve can switch into a closed state. It is to be understood that in normal cases a typical packaging container comprises a total of four vertical side walls and a bottom wall such that a cuboid is formed, each of the vertical side walls having an upper edge and a closing flap being pivotably fixed to the upper edge.

It is also to be understood that the term "closing flap" has a broad meaning and is not limited to a single piece element entirely or partially closing an opening of the packaging container. Rather, the term "closing flap" encompasses any element between which the inflation valve may be sandwiched when the packaging container is in a closed state and which is suitable for acting on the inflation valve upon inflation of the dunnage bag such that it is operated towards the closed position.

In a further preferred embodiment the packaging container of the packaging system comprises a marking on an inner surface of the first closing flap indicating a desired position of the inflation valve. This allows a packer to easily find the correct place for positioning the inflation valve when introducing the dunnage bag into the packaging container.

In a further preferred embodiment the packaging container of the packaging system comprises a marking on an outer surface of the second closing flap at the desired position of the inflation valve, which would be just on the other side of the closing flap opposite to the optional marking on the inner surface. This allows to reliably position and injection means after the packaging container has been closed, in order to inflate the inflatable dunnage bag.

The invention also comprises a method of applying a dunnage means according to the above mentioned embodiments in a packaging container comprising at least a first vertical side wall and a second vertical side wall, the first and second vertical side walls being adjacent and substantially orthogonal to each other, each side wall having an upper edge, wherein a first closing flap is pivotably fixed to the upper edge of the first vertical side wall and a second closing flap is pivotably fixed to the upper edge of the second vertical side wall. According to the invention the method comprises the following steps:
a) placing the dunnage bag over the item(s) in the packaging container such that the inflation valve is adjacent a side edge of the first closing flap, both closing flaps being in substantially open positions; and
b) folding the second closing flap inwardly into a substantially closed position such that the dunnage bag is jammed between a side edge of the second closing flap and the first closing flap and/or the first vertical side wall.

This method provides for a reliable fixation of the inflation valve already upon the start of the closing procedure of the container, without the need to use specific fixation means and/or to hook the inflation valve into the material of the packaging container.

In a preferred embodiment the method further comprises the following steps:
c) moving the first closing flap inwardly into a substantially closed position;
d) penetrating the first closing flap and a wall of the dunnage bag with a gas injection means such that the gas injection means enters the gas injection chamber;
e) introducing pressurized gas into the gas injection chamber and further into an inflatable volume of the dunnage bag; and
f) terminating the introduction of pressurized gas when the second closing flap is sufficiently urged by the pressurized dunnage bag against the inflation valve to operate the inflation valve towards a closed position.

This method allows to inflate the dunnage means which has previously been placed inside the packaging container from the outside without the specific provision for example of an inflation nozzle at the outside of the container. Rather, a simple injection means, such as an injection needle, may penetrate the wall of the packaging container, which wall preferably is made of corrugated paper, and also penetrates the first wall of the dunnage bag such that it enters the injection chamber. Especially in case of an injection needle having an oblique injection tip the injection means can be forwarded until it abuts a distal end of the injection chamber or the upper surface of the second closing flap, respectively. No specific positioning means is necessary to exactly control the penetration depth of the injection means, which makes its application very easy and quick.

By introducing pressurized gas, such as pressurized air or pressurized nitrogen, into the injection chamber, the pressurized gas passes from the injection chamber into the inflatable volume of the dunnage bag, such that the dunnage bag is inflated. Upon inflation, the volume of the dunnage bag expands and fills out more and more the void space inside the packaging container. As a consequence, the inflating dunnage bag comes into contact with the lower surface of the second closing flap and begins to press the second closing flap in an upward direction. This causes the inflation valve which is situated between the first closing flap and the second closing flap to be more and more squeezed between both closing flaps. As a result, at the latest when the introduction of pressurized gas into the injection chamber is terminated, the squeezing of the inflation valve operates the inflation valve towards a closing position wherein the inflated volume of the dunnage bag is gas tightly sealed against an outside environment.

In summary, the proposed method allows to reliably and easily inflate the dunnage bag and to reliably seal the inflated volume of the dunnage bag after inflation, such that the dunnage bag remains inflated during shipping of the packaging container.

In a further preferred embodiment the gas pressure inside the dunnage bag and/or an expansion of the side walls of the container is monitored. This allows to exactly determine the best moment for the termination of the introduction of pressurized gas in order to make the duration of the inflation process as short as possible and, at the same time, to ensure that the inflation bag is sufficiently inflated for providing the desired dunnage and cushioning characteristics to the item(s) packaged inside the packaging container. By way of example, inflation can be stopped upon reaching a predetermined pressure threshold and/or upon reaching a predetermined expansion threshold.

In a further preferred embodiment the injection means is pressurized during step d). This prevents the injection means from being blocked during the process of penetration of the walls of the packaging container and of the dunnage bag and therefore ensures a continuous inflation capability of the injection means.

Other features and advantages of the invention will become apparent from the following detailed description which refers to the attached drawing.
- Figure 1: is a plan view of a dunnage means comprising an inflatable dunnage bag and an inflation valve;
- Figure 2: is an enlarged perspective view on a front surface of a first embodiment of the inflation valve of figure 1 together with parts of the dunnage bag;
- Figure 3: is an enlarged perspective view on a rear surface of the inflation valve of figure 2, without any parts of the dunnage bag;
- Figure 4: is a perspective view from above of a packaging container together with the dunnage means of figures 1 to 3, wherein the packaging container is in an intermediate state during closure;
- Figure 5: is an enlarged sectional side view through a portion of the packaging container and the dunnage means of figure 4, wherein the packaging container is in a further intermediate state during closure;
- Figure 6: is a view similar to figure 5, wherein the packaging container is in a finally closed state;
- Figure 7: is an enlarged perspective view from above on a second embodiment of the inflation valve of figure 1 in a closed state; and
- Figure 8: is a view similar to figure 7, wherein the inflation valve is in an open state..

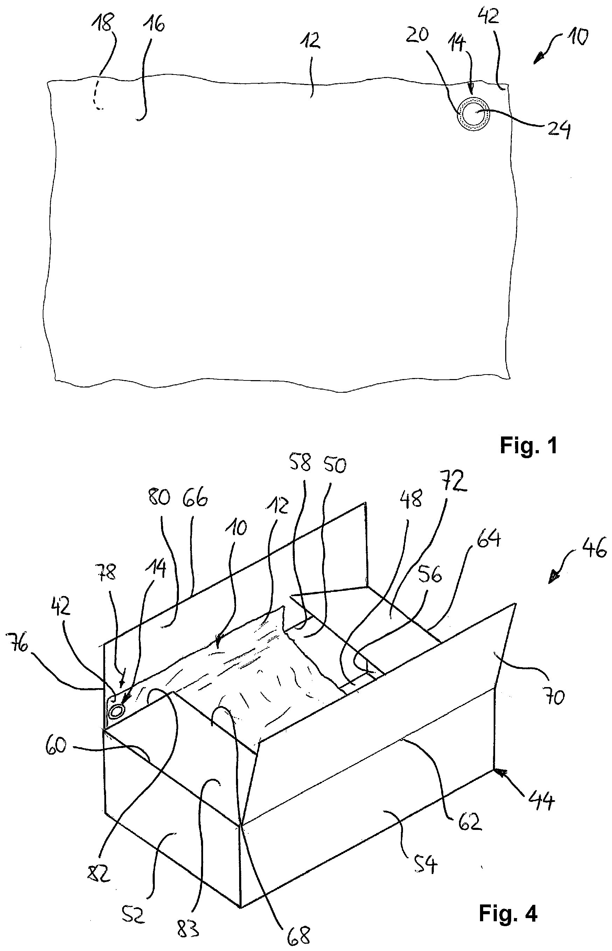

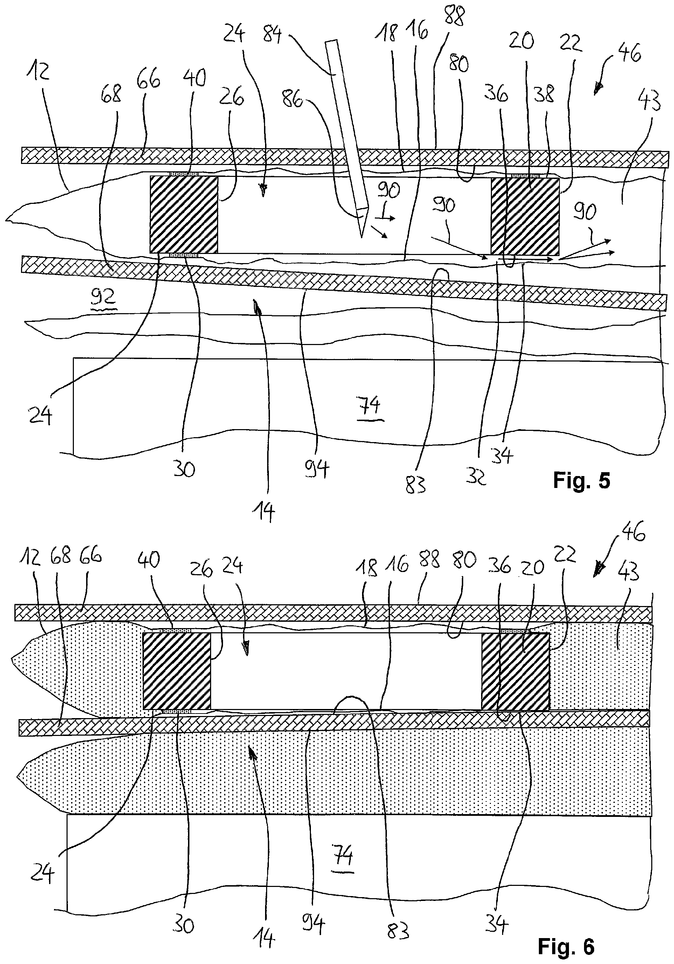

Referring to figure 1, a dunnage means 10 comprises an inflatable dunnage bag 12 and an inflation valve 14. As best can be seen from figures 5 and 6, the inflatable dunnage bag 12 has a first wall 16 and a second wall 18 bold at least in an uninflated state of the dunnage bag 12, as shown in figure 1 and figure 5, the first wall 16 and the second wall 18 are substantially parallel. By way of example, the dunnage bag 12 may be manufactured from a thin flexible polyethylene foil or film. For manufacturing the dunnage bag 12, by way of example, two webs of film may be superposed to each other and sealedly connected to each other by welding along four linear lines, such that a dunnage bag 12 is formed, which has, in the plan view of figure 1, in its uninflated state a substantially rectangular shape.

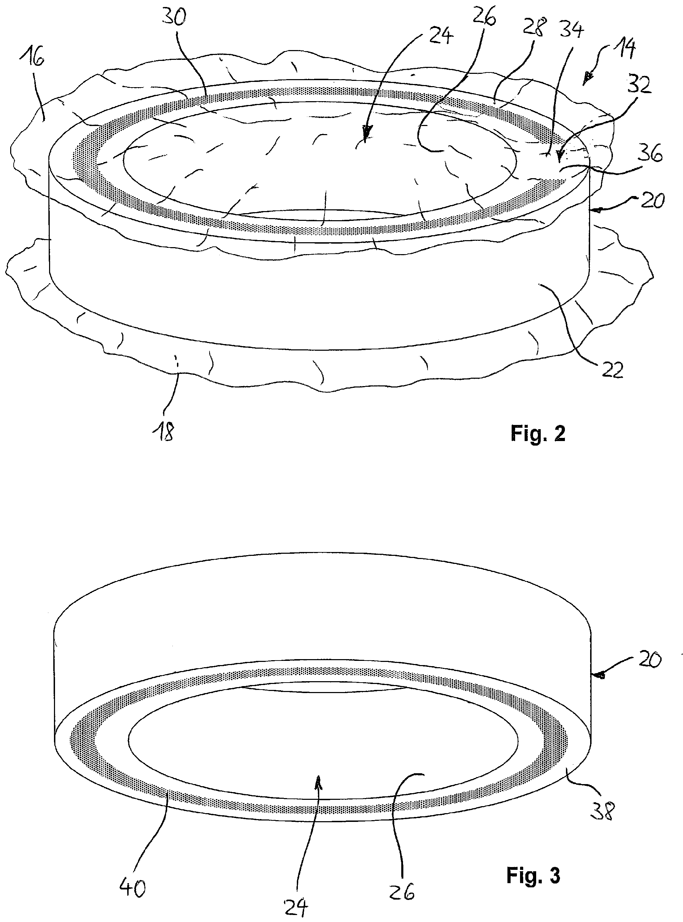

As is shown in figures 2 and 3, in a first embodiment the inflation valve 14 comprises a solid member 20, which in the shown exemplary embodiment is formed by a ring element having a substantially circular shape with an outer circular ring surface 22 and a central through opening 24, the latter forming an injection chamber. The injection chamber 24 is delimited radially outwardly by an inner circular ring surface 26. It is to be understood that the solid member 20 may have other shapes, such as rectangular or triangular outer shapes as well as inner shapes of the through opening 24. Solid member 20 may be manufactured, by way of example, from a rubber type material, such as rubber, silicone, mixture materials, or the like.

Preferably, the solid member 20 is manufactured from a material having a rubber type elastic softness.

As best can be seen from figures 2, 5 and 6, the solid member 20 is arranged between the first wall 16 and the second wall 18 of the dunnage bag 12, which means that the solid member 20 is arranged inside the closed dunnage bag 12. It therefore must be inserted into the dunnage bag 12 prior to sealedly closing the dunnage bag 12. As can be seen from figure 2, the first wall 16 of the dunnage bag 12 is discontinuously connected to a front surface 28 of the solid member 20 in a first circular ring shape connection region 30, which is shown as a dashed area. The connection region 30 is circumferential with respect to the gas injection chamber 24, and in the present embodiment, by way of example, is coaxial with the ring shape solid member 20 and with the injection chamber 24. By way of example, the first connection region 30 may be formed by heat welding, ultrasonic welding or by gluing. It is to be understood that also other types of connection which are not mentioned here are possible.

As can be seen from figure 2, the first connection region 30 of this particular embodiment of an inflation valve 14 is not continuous, but rather comprises an interruption or gap 32 where the first wall 16 is not connected to the solid member 20. That part of the first wall 16 of the dunnage bag 12 which is situated over gap 32 and between the opposed edges of the first connection region 30 forms a valve element 34 of the inflation valve 14, as will be explained in more detail further below. Correspondingly, that part of the front surface 28 of the solid member 20 which is situated below valve element 34 and between the edges of gap 32 forms a valve seat 36. While in the specific embodiment shown in the figures only one single gap 32 is provided, in other embodiments more than one single gaps can be provided. Such a plurality of gaps can be arranged close to each other in the form of a group of gaps, but can also be arranged uniformly distributed over the extension of the first connection region.

As also can be seen from figure 2, the second wall 18 of the dunnage bag 12 is continuously and gas tightly connected to a rear surface 38 (see figure 3) of solid member 20 in a second connection region 40, which in figure 3 is shown as a dashed ring shape region. Other than the first connection region 30, the second connection region 40 is continuous and does not have any interruption or gap. Again, the second connection region 40 may be formed, by way of example, by heat welding, ultrasonic welding or gluing, as has been mentioned above already with respect to the first connection region 30. Also, the second connection region is circumferential with respect to the gas injection chamber 24 and is in the shown embodiment, by way of example, coaxial to the ring shape solid member 20 and the injection chamber 24. As a result, the gas injection chamber 24 is delimited by the inner circle ring surface 26 and both the first and second walls 16 and 18 of the dunnage bag 12.

As best can be seen from figure 1, the inflation valve 14 is arranged adjacent a corner 42 of the dunnage bag 12, in the present embodiment by way of example in the right upper corner 42.

Generally, when a gas, such as a or nitrogen, is introduced under pressure into injection chamber 24, wherein the inflation valve 14 is free and not engaged by any other element, valve element 34 is distant from valve seat 36 such that the fluid passage is formed between valve element 34 and valve seat 36 (figure 2). By consequence, the gas can flow through the fluid passage between valve element 34 and valve seat 36 from the gas injection chamber 24 into an inflatable volume 43 of the dunnage bag 12, this inflatable volume 43 being formed by that volume of the dunnage bag 12 which is situated radially outwardly from the connection regions 30 and 40 (figure 5). This operation state of the inflation valve 14 characterizes an "open" position of the inflation valve 14.

On the other hand, when an element, such as a portion of a packaging container, in which the dunnage means 12 is introduced, urges valve element 34 against valve seat 36, the fluid connection between the gas injection chamber 24 and the inflatable volume 43 of the dunnage bag 12 will become interrupted. By consequence, the gas encased within the inflatable volume of the dunnage bag 12 cannot escape from the inflatable volume. This operation state of the inflation valve 14 characterizes a "closed" position of the inflation valve 14.

As shown in figure 4, a packaging container 44 and the dunnage means 10 form a packaging system 46. The packaging container 44 preferably is made of corrugated paper or the like and comprises a bottom wall 48 which, in the present embodiment, by way of example has a rectangular shape. However, a variety of other shapes is possible. The edges of the bottom wall 48 are connected continuously to a first vertical side wall 50, a second vertical side wall 52, a third vertical side wall 54, and a fourth vertical side wall 56. As can be seen from figure 4, all vertical side walls 50 to 56 are orthogonal with respect to the bottom wall 48 and build a substantially rectangular cuboid which has an open top side in the state of figure 4. Also, as can be seen from figure 4, the first vertical side wall 50 and the second vertical side wall 52 are adjacent and substantially orthogonal to each other. The other adjacent side walls are also substantially orthogonal to each other.

Each side wall 50 to 56 has an upper edge 58 to 64, wherein a first closing flap 66 is pivotably fixed to the first upper edge 58 of the first vertical side wall 50, and wherein a second closing flap 68 is pivotably fixed to the second upper edge 60 of the second vertical side wall 52. Third and fourth closing flaps 70 and 72 are pivotably fixed to the third and fourth upper edges 64 and 66, respectively. The connections between the closing flaps 66 to 72 and the vertical side walls 50 to 56 may be formed by a line of decreased stiffness with respect to adjacent areas, such that hinges are formed allowing to move, that is to fold the closing flaps 66 to 72 from a substantially upright or vertical open position inwardly into a substantially horizontal closed position. However, it is to be understood that any other type of hinge is possible.

Now, the application of the dunnage means 10 in the packaging system 46 will be explained in detail.

At first, when the packaging container 44 is in a fully open state, that is when the vertical side walls 50 to 56 are in an upright or even outwardly bent position, a packer places items to be shipped manually inside the packaging container 44. Alternatively, it is also possible that a robot places said items to be shipped automatically inside the packaging container 44. The items are not visible in figure 4, but one item 74 is schematically shown in figures 5 and 6.

After all items 74 have been placed inside the packaging container 44 and while the closing flaps 66 to 70 to remain in their substantially open positions, the packer (or a robot) places a dunnage bag 12 over the items 74 in the packaging container 44. The packer selects the orientation of the dunnage bag 12 such that the inflation valve 14 is adjacent a side edge 76 of the first closing flap 66 and such that a symmetry plane of the ring shape solid member 20 of the inflation valve 14 is substantially parallel to the first closing flap 66. The correct positioning of the dunnage bag 12 is facilitated when the packaging container 44 comprises a marking, for example in the form of an arrow 78 on an inner surface 80 (see figure 4) of the first closing flap 66, which indicates a desired position of the inflation valve 14 with respect to the first closing flap 66.

While the packer (or the robot) holds the inflation valve 14 at the desired position with respect to the first closing flap 66, the second closing flap 68 is moved (pivoted) inwardly into a substantially closed position, as is shown in figure 4. As a result, the dunnage bag 12 becomes jammed between a side edge 82 of the second closing flap 68 and initially the first closing flap 66 and thereafter the first vertical side wall 50. As can be seen from figure 4, in this state of the closing procedure of the packaging container 44 the dunnage bag 12 is bent or folded such that a portion is substantially parallel to the upright first closing flap 66 and that another portion is substantially horizontal and covering the items 74 inside the packaging container 44.

In a next step, the fourth closing flap 72 and thereafter the third closing flap 70 are pivoted inwardly into a substantially horizontal and therefore closed position. Then, the first closing flap 66 is moved inwardly and folded into a substantially horizontal and therefore closed position. As a result, the packaging container 44 is fully closed. When the first closing flap 66 is folded into its closed position, the dunnage bag 12 is partially folded by approx. 180° and inflation valve 14 becomes pinched between an upper surface 83 of the second closing flap 68 and the inner and lower surface 80 of the first closing flap 66. The closing flaps 66 to 72 may be fixed in their closed position by applying one or more straps or adhesive tapes to the packaging container 44.

In a further step, an injection means in the form of an injection needle 84 (see figure 5) is set under pressure by connecting the injection needle 84 with a supply (not shown) of pressurized gas, such as pressurized air or pressurized nitrogen. As can be seen from figure 5, the injection needle 84 has an oblique needle tip 86. The injection needle 84 is moved to a position at an outer surface 88 of the first closing flap 66 which corresponds to the position of the inflation valve 14. As is be readily understood by the skilled person, the injection means may also comprise a plurality of injection needles, e.g. a grouped or bunched set of needles. In order to ease positioning of the injection needle 84 relative to the inflation valve 14, a marking may have been applied to the outer surface 88 of the first closing flap 66 indicative of the desired position of the inflation valve. The movement of the injection needle 84 may be executed manually by a packer or automatically by a robot or any other machine means.

When the injection needle 84 is positioned at the correct position, that is at the position of the inflation valve 14, it is moved in a substantially axial direction such that is penetrates the first closing flap 66 and thereafter the first wall 16 of the dunnage bag 12 at a position radially inwardly of the inner circular ring surface 26 delimiting the injection chamber 24. As a result, the injection needle tip 86 enters the gas injection chamber 24. Since the injection needle 84 is connected to the pressurized gas supply, pressurized gas exits from the needle tip 86 during the penetration movement. When the needle tip 86 is reliable positioned within the injection chamber 24, the axial penetration movement is stopped, Pressurized gas further exits from the needle tip 86 and thus is introduced into the gas injection chamber 24 and further flows through the passage formed between the valve element 34 and the valve seat 36 from the injection chamber 24 into the inflatable volume of the dunnage bag 12. This is indicated by arrows 90 in figure 5.

As a result, the inflatable volume of the dunnage bag 12 starts to expand and to fill out a void space 92 inside the packaging container 44, this void space 92 initially existing between the items 74 and the closing flaps 66-72. In the course of the inflation, the dunnage bag 12 expands and comes into contact with a lower surface 94 of the second closing flap 68. As a result, the second closing flap 68 is urged upwardly such that the inflation valve 14 becomes increasingly squeezed between the second closing flap 68 and the first closing flap 66. As a further result, the valve element 34 (first wall 16 of dunnage bag 12) is pressed with an increasing force towards the valve seat 36, or, in other words, the inflation valve 14 is operated by the second closing flap 68 towards a closed position.

The inflation process is monitored by suitable means. In one preferred embodiment, the packer simply observes the form and shape of the packaging container during inflation. When the dunnage bags expands and comes into contact with the side walls 50 to 56 and/or the closing flaps 66 to 72, this will cause the packaging container to slightly change its shape. As soon as the packer comes to the conclusion that the change of shape of the packaging container is indicative for a sufficient expansion of the dunnage bag 12 to provide the desired dunnage and cushioning characteristics to the items 74, the introduction of pressurized gas is terminated and the injection needle 84 is removed from the injection chamber 24.

In an alternative preferred embodiment, a camera observes the form and shape of the packaging container during inflation. In an automated control means (not shown), the image delivered by the camera is compared with memorized allowable shape characteristics. As soon as it is detected that the allowable shape characteristics are reached, the introduction of pressurized gas is terminated and the injection needle 84 is moved out of the injection chamber 24 and the packaging container 44.

In a further preferred embodiment, it is also possible to monitor the inflation pressure by means of a pressure sensing means. As soon as the sensed pressure reaches or exceeds a threshold value, the introduction of pressurized gas is terminated and the injection needle 84 is moved out of the injection chamber 24 and the packaging container 44.

When the injection needle 24 is removed, the pressure inside the injection chamber 24 drops, and by consequence also the pressure in the passage between the valve element 34 and the valve seat 36 drops. This allows the valve element 36 in the form of the first wall 16 to contact the valve seat 36, such that the inflation valve 14 switches into a closed state. In this closed state, the gas in the inflated dunnage bag is sealed against an outside environment.

The packaging container 44 now is ready for shipment.

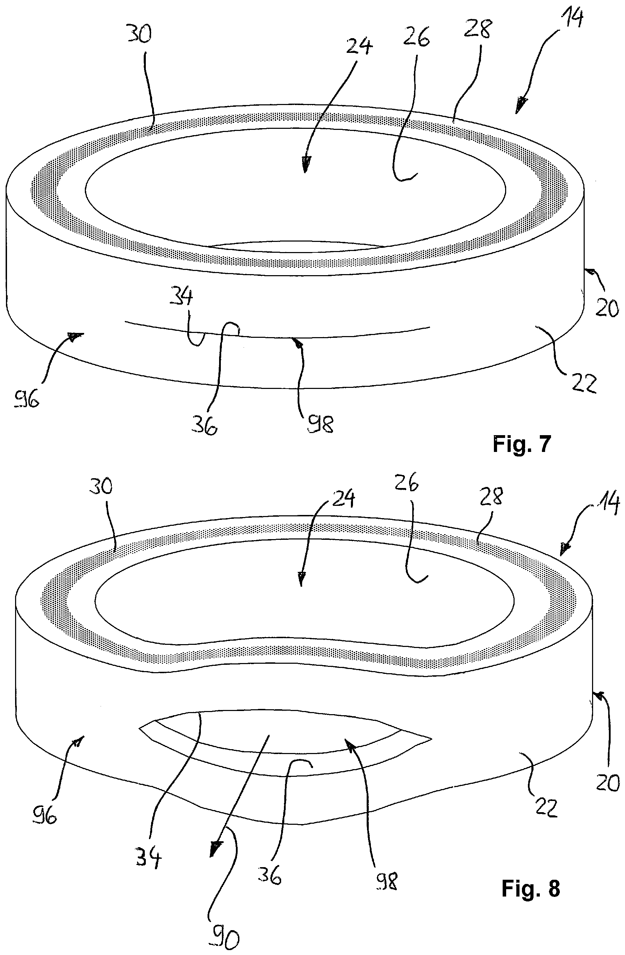

A particularly preferred second embodiment of an inflation valve 14 with a solid member 20 is shown in figures 7 and 8. We hereinafter refer only to the differences with respect to the embodiment according to figures 2-6.

The solid member 20 according to the embodiment of figures 7 and 8 comprises a wall 96 surrounding the injection chamber 24, wherein the wall 96 comprises a discontinuous material region in the form of a slit 98 which penetrates the wall 96 from the inner surface 26 of the solid member 20 to the outer surface 22 of the solid member 20. As in the preceding embodiment, the wall 96 and thus also the region where the discontinuous material region 98 is located is made of a rubber-like elastically deformable material, such as rubber or silicone. Though, in an embodiment not shown the solid member can be made from at least two different components of material, wherein only that region where the discontinuous material region is located is made of a rubber-like elastically deformable material, wherein the rest of the solid member is made from a stiff and essentially non-deformable material.

As can be seen from the figures, the slit 98 has a straight shape when seen in radial direction, and a plane of the slit 98 is parallel to a plane of the front and rear surfaces 28, 38 of the solid member 20. Both the first wall 16 and the second wall 18 of the dunnage bag 12 are continuously connected to the front surface 28 and the rear surface 38, respectively, of the solid member 20 in respective first and second connection regions 30, 40 (the first and second walls 16 and 18 not being shown). Both the first and second connection regions 30, 40 are circumferential with respect to the gas injection chamber 24.

Figure 7 shows the inflation valve 14 in a first state, wherein the valve element 34 and the valve seat 36 are contacting each other such that air cannot pass through the wall 96 of the solid member 20, the inflation valve 14 thus being in a closed position. In an installed and operated state, the valve element 34 and the valve seat 36 are urged against each other not only by the moving portion 68 (second closing flap) of the packaging container 44, but additionally by the rubber-like elastic material property of the solid member 20. Or, in other words: the closed position of the inflation valve 14 as shown in figure 7 is the release or inoperative position, that is the position even without any external forces acting on the inflation valve 14.

Figure 8 shows the inflation valve 14 in a second state, wherein the valve element 34 and the valve seat 36 are distant from each other forming a mouth shape open passage for gas to be introduced from the injection chamber 24 into the dunnage bag 12 (arrow 90). The valve element 34 and the valve seat 36 are urged into the shown positions by the pressurized gas being introduced into the injection chamber 24 in case that no additional external force (as applicable by the above mentioned moving portion 68) urges the valve element 34 and the valve seat 36 in the closed contacting position.

While in the shown embodiment the slit 98 extends in circumferential direction only within an angular region of approx. 45°, in another embodiment not shown it may extend within a smaller angular region (down to approx. 20°) or within a larger angular region (up to approx. 180°).

As can be seen from the above descriptions, in both exemplary embodiments the inflation valve 14 forms a controllable nonreturn valve or check valve, which allows air to be introduced into the dunnage bag 12, but which prevents air to exit the dunnage bag 12 when it is controlled by a portion 68 of the packaging container 44 from an open into a closed position. It is to be understood that also types of controllable valves other than those shown in the figures may be utilized in order to provide the advantages set forth in the above specification.

## Claims

1. A dunnage means (10) for filling the void space (92) in a packaging container (44), comprising: an inflatable dunnage bag (12) having a first and a second wall (16, 18), the first and second walls (16, 18) at least partially being substantially parallel in an uninflated state of the dunnage bag (12); and an inflation valve (14) configured to allow to inflate the dunnage bag (12) with a gas and to gas tightly seal the dunnage bag (12) after inflation, the inflation valve (14) comprising a solid member (20) with a valve seat (36), **characterized in that**
the solid member (20) being arranged between the first and the second wall (16, 18) of the dunnage bag (12) inside the dunnage bag (12), and
the inflation valve (14) being configured to be operated towards a closed position by a portion (68) of the packaging container (44), preferably by a closing flap (68) of the packaging container (44) during inflation of the dunnage bag (12).

2. The dunnage means (10) according to claim 1, wherein the inflation valve (14) comprises: a gas injection chamber (24) which is delimited at least by a surface (26) of the solid member (20) and the first wall (16) of the dunnage bag (12); and a valve element (34) being configured to connect the injection chamber (24) with an inflatable volume (43) of the dunnage bag (12) in an open position and to gas tightly seal the inflatable volume (43) of the dunnage bag (12) against the injection chamber (24) in a closed position.

3. The dunnage means (10) according to claim 2, wherein the first wall (16) of the dunnage bag (12) being discontinuously connected to a front surface (28) of the solid member (20) in a first connection region (30), the first connection region (30) being circumferential with respect to the gas injection chamber (24).

4. The dunnage means (10) of claim 3, wherein the solid member (20) comprises a through opening, the gas injection chamber (24) being delimited by the inner surface (26) of the through opening, the first wall (16), and the second wall (18) of the dunnage bag (12), the second wall (18) being continuously and gas tightly connected to a rear surface (38) of the solid member (20) in a second connection region (40), the second connection region (40) being circumferential with respect to the gas injection chamber (24).

5. The dunnage means (10) according to any of the preceding claims, wherein the solid member (20) comprises a wall (96) surrounding the injection chamber (24), wherein the wall comprises a discontinuous material region (98) which penetrates the wall (96) from the inner surface (26) of the solid member (20) to an outer surface (22) of the solid member (20), and wherein at least that portion of the wall where the discontinuous material region (98) is located is made of a rubber-like elastically deformable material.

6. The dunnage means (10) according to claim 5, wherein the discontinuous material region comprises a slit (98), a plane of the slit (98) being preferably parallel to a plane of the front and rear surfaces (28, 38) of the solid member (20).

7. The dunnage means (10) according to any one of claims 5 and 6, wherein the first wall (16) and the second wall (18) of the dunnage bag (12) being continuously connected to a front surface (28) and a rear surface (38), respectively, of the solid member (20) in first and second connection regions (30, 40), respectively, the first and second connection regions (30, 40) being circumferential with respect to the gas injection chamber (24).

8. The dunnage means (10) according to any one of the preceding claims, wherein the solid member (20) comprises a ring element having a substantially circular shape.

9. The dunnage means (10) according to any one of the preceding claims, wherein the solid member (20) comprises a rubber type material.

10. The dunnage means (10) according to any one of claims 3-9, wherein at least one of the connection regions (30, 40) is formed by heat welding, ultrasonic welding or gluing.

11. The dunnage means (10) according to any one of the preceding claims, wherein the inflation valve (14) is arranged adjacent a corner (42) of the dunnage bag (12).

12. Packaging system (46), comprising a packaging container (44) for packaging at least one item (74), **characterized in that** it further comprises a dunnage means (10) according to any one of the preceding claims.

13. The packaging system (46) according to claim 12,
wherein the packaging container (44) comprises at least a first vertical side wall (50) and a second vertical side wall (52), the first and second vertical side walls (50, 52) being adjacent and substantially orthogonal to each other, each side wall (50, 52) having an upper edge (58, 60), wherein a first closing flap (66) is pivotably fixed to the upper edge (58) of the first vertical side wall (50) and a second closing flap (68) is pivotably fixed to the upper edge (60) of the second vertical side wall (52), wherein when the packaging container (44) is in a closed state the dunnage means (10) being arranged such that the inflation valve (14) is pinched between an upper surface (83) of the second closing flap (68) and a lower surface (80) of the first closing flap (66).

14. The packaging system (46) according to any one of claims 12-13, wherein it comprises a marking (78) on an inner and/or an outer surface (80, 88) of the first closing flap (66) indicating a desired position of the inflation valve (12).

15. Method of applying a dunnage means (10) according to any one of claims 1-11 in a packaging container (44) comprising at least a first vertical side wall (50) and a second vertical side wall (52), the first and second vertical side walls (50, 52) being adjacent and substantially orthogonal to each other, each side wall (50, 52) having an upper edge (58, 60), wherein a first closing flap (66) is pivotably fixed to the upper edge (58) of the first vertical side wall (50) and a second closing flap (68) is pivotably fixed to the upper edge (60) of the second vertical side wall (52), comprising the following steps:
a. placing the dunnage bag (12) over the item(s) (74) in the packaging container (44) such that the inflation valve (14) is adjacent a side edge (76) of the first closing flap (66), both closing flaps (66, 68) being in substantially open positions; and
b. moving the second closing flap (68) inwardly into a substantially closed position such that the dunnage bag (12) is jammed between a side edge (82) of the second closing flap (68) and the first closing flap (66) and/or the first vertical side wall (50).

16. The method according to claim 15, further comprising the following steps:
c. moving the first closing flap (66) inwardly into a substantially closed position;
d. penetrating the first closing flap (66) and a wall (16) of the dunnage bag (12) with a gas injection means (84) such that the gas injection means (84) enters the gas injection chamber (24);
e. introducing pressurized gas into the gas injection chamber (24) and further into an inflatable volume (43) of the dunnage bag (12); and
f. terminating the introduction of pressurized gas when the second closing flap (68) is sufficiently urged by the pressurized dunnage bag (12) against the inflation valve (14) to operate the inflation valve (14) towards a closed position.

17. Method according to claim 16, wherein the gas pressure inside the dunnage bag (12) and/or an expansion of the side walls (50-56) of the packaging container (44) is monitored.

18. Method according to any one of claims 16-17, wherein the injection means (84) is pressurized during step d).
